Europäisches Patentamt

European Patent Office

Office européen des brevets

(11) Veröffentlichungsnummer : **0 185 994**
**B1**

(12) # EUROPÄISCHE PATENTSCHRIFT

(45) Veröffentlichungstag der Patentschrift :
07.03.90

(21) Anmeldenummer : 85115431.0

(22) Anmeldetag : 05.12.85

(51) Int. Cl.⁵ : **G 01 S   3/80**, G 01 S   3/74,
**H 01 Q 25/00**

(54) **Vorrichtung zur Richtungsbildung beim Empfang von Wellenenergie.**

(30) Priorität : 13.12.84 DE 3445373

(43) Veröffentlichungstag der Anmeldung :
02.07.86 Patentblatt 86/27

(45) Bekanntmachung des Hinweises auf die Patenterteilung : 07.03.90 Patentblatt 90/10

(84) Benannte Vertragsstaaten :
AT BE CH DE FR GB IT LI LU NL SE

(56) Entgegenhaltungen :
GB—A— 2 115 572
EASCON 79, IEEE Electronics and Aerospace systems Conference, Part III, 1979, Seiten 602-609, IEEE, New York, US; G. HETLAND et al.: "Optical sonar system concepts"
PROCEEDINGS OF THE IEEE, Band 72, Nr. 7, Juli 1984, Seiten 820-830, IEEE, New York, US; W.T. RHODES et al.: "Acoustooptic algebraic processing architectures"
IBM TECHNICAL DISCLOSURE BULLETIN, Band 22, Nr. 5, Oktober 1979, Seite 2073, IBM Corp., New York, US; C.H. CLAASSEN: "Efficiency stabilization for multi-beam acousto-optic modulators"

(73) Patentinhaber : **Fried. Krupp Gesellschaft mit beschränkter Haftung**
**Altendorfer Strasse 103**
**D-4300 Essen 1 (DE)**

(72) Erfinder : **Rathjen, Dirk, Dr.**
**Am Rüten 68**
**D-2800 Bremen 33 (DE)**

**Beschreibung**

Die Erfindung betrifft eine Vorrichtung zur Richtungsbildung beim Empfang von Wellenenergie bekannter Mittenfrequenz der im Oberbegriff des Anspruchs 1 genannten Art.

Zum Peilen von Zielen, die akustische oder elektromagnetische Wellenenergie abstrahlen oder reflektieren, werden aus Empfangssignalen einer Empfangsanordnung durch Laufzeit- oder Phasenkompensation Richtcharakteristiken gebildet. Die Empfangsanordnung besteht beispielsweise aus äquidistant in einer Reihe oder auf einer Fläche angeordneten Empfangswandlern. Die Ausmaße der Empfangsanordnung bestimmen die Richtschärfe, die Stückzahl der Empfangswandler und ihre Plazierung die Nebenzipfeldämpfung der Richtcharakteristiken. Zum Peilen wird die Richtcharakteristik elektronisch geschwenkt oder es werden simultan elektronisch so viele Richtcharakteristiken entsprechend der gewünschten Winkelauflösung gebildet. Abhängig von der Peilgenauigkeit steigt der Aufwand an elektronischer Signalverarbeitung.

Es ist bereits eine Vorrichtung bekannt, bei der ein akusto-optischer Modulator zur Richtungsbildung in der Sonartechnik eingesetzt wird (« Optical Sonar System Concepts », EASCON 79, IEEE, Electronics and Aerospace Systems Conference, Part III, 1979, pp. 602-609). In dieser Vorrichtung werden Empfangssignale von in einer Reihe angeordneten elektroakustischen Empfangswandlern durch nachgeordnete lichtemittierende Elemente, z. B. Fotodioden, in Lichtintensitäten umgesetzt. Die lichtemittierenden Elemente sind in verkleinertem Maßstab ebenfalls in einer Reihe — so wie die Empfangswandler — angeordnet. Ihr emittiertes Licht durchstrahlt den nachgeordneten akusto-optischen Modulator, der aus einem transparenten Medium, z. B. aus Kristall oder Glas, besteht. Quer zur Durchleuchtungsrichtung durchläuft eine hochfrequente Schallwelle eines Schallgebers mit einer Trägerfrequenz von einigen MHz den akusto-optischen Modulator. Auf der dem Schallgeber gegenüberliegenden Seite des Kristalls ist ein Absorber für die Schallwellen vorgesehen, so daß sich keine stehenden Wellen ausbilden können. In dem akusto-optischen Modulator wird durch die Schallwelle eine räumliche Brechungsindexmodulation erzielt, an der das einfallende Licht gebeugt wird. Die Amplitude der Schallwelle bestimmt die Stärke der Brechungsindexmodulation und damit die Verteilung der gesamten Lichtenergie auf die einzelnen Beugungsordnungen. Eine zeitliche Variation der Schallamplitude bewirkt eine zeitliche Variation der Lichtintensität in jeder Beugungsordnung. Üblicherweise wird nur eine der Beugungsordnungen betrachtet, beispielsweise die erste, und der Rest abgeblendet.

Die Richtungsbildung wird durch Amplitudenmodulation der trägerfrequenten Schallwelle bewirkt. Die Modulationsfrequenz der Schallwelle wird abhängig von der gewünschten Empfangsrichtung, der Mittenfrequenz und Ausbreitungsgeschwindigkeit der empfangenen Wellenmergie, vom Maßstabsfaktor zwischen der Empfangsanordnung und der Anordnung der lichtemittierenden Elemente und von der Ausbreitungsgeschwindigkeit der Schallwelle im Kristall des akusto-optischen Modulators gewählt. Die Modulationsfrequenz ist um so größer je stärker die Empfangsrichtung von der auf die Mitte der Empfangsanordnung errichteten Normalen abweicht. Die Empfangsrichtung wird durch Variation der Modulationsfrequenz geschwenkt. Zum Bilden einer Empfangsrichtung senkrecht zur Empfangsanordnung beträgt die Modulationsfrequenz Null.

Mit dieser bekannten Vorrichtung ist die gleichzeitige Bildung mehrerer Empfangsrichtungen nicht möglich. Gepeilt werden kann nur durch Schwenken der Richtcharakteristik, indem die Modulationsfrequenz durchgestimmt wird. Die Anzeige erfolgt nach Zwischenspeicherung. Kurzzeitvorgänge, beispielsweise impulsförmig einfallende Wellenenergie, wie sie von einer Aktivsonaranlage eines fremden Schiffes abgestrahlt wird, sind daher mit einer solchen Vorrichtung nicht sicher zu peilen, da nicht gleichzeitig alle Empfangsrichtungen überwacht werden können.

Der Erfindung liegt die Aufgabe zugrunde, eine Vorrichtung der eingangs genannten Art zu schaffen, bei der gleichzeitig mehrere Empfangsrichtungen gebildet, ausgewertet und angezeigt werden können.

Diese Aufgabe wird bei einer Vorrichtung der im Oberbegriff des Anspruchs 1 genannten Art erfindungsgemäß durch die Merkmale im Kennzeichenteil der Ansprüche 1 und 2 gelöst.

Austrittswinkel der im akusto-optischen Modulator gebeugten Lichtwellen sind von der Trägerfrequenz der Schallwellen abhängig. Durch die gleichzeitige Ansteuerung der akusto-optischen Modulators mit einer Anzahl amplitudenmodulierter Schallwellen unterschiedlicher Trägerfrequenzen ist eine gleichzeitige Anzeige und Auswertung sämtlicher durch die zugehörigen Modulationsfrequenzen eingestellten Empfangsrichtungen möglich. Es werden alle parallel austretenden Lichtstrahlen mit der Sammellinse gebündelt, so daß jeweils an Punkten in der Brennebene der Sammelinse alle Lichtstrahlen einer einzigen Beugungsordnung vereinigt sind. An Brennpunkten der Lichtstrahlen erster Beugungsordnung sind lichtempfindliche Sensoren angeordnet. Ihre elektrischen Signale können ohne Zwischenspeicherung unmittelbar angezeigt werden und repräsentieren die Empfangsrichtungen.

Bei der erfindungsgemäßen Vorrichtung wird für die gleichzeitige Anzeige von Wellenergie aus einer vorgebbaren Anzahl von Empfangsrichtungen ein bekannter akusto-optischer Effekt ausgenutzt. Dieser Effekt ist in einem Artikel « Acousto-Optics : A review of Foundamentals » Adrianus Korpel, Proceedings of the IEEE, Vol. 69, No. 1, Jan. 1981, pp 48-53, zur Spektralanalyse von Schallwellen beschrieben. In Proceedings of the IEEE, Band 72, Nr. 7, Juli 1984, Seiten 820-830, IEEE, New York, US ; W.T. Rhodes et

al.: « Acoustooptic algebraic processing architectures » wird dieser Effekt zur Multiplikation eines Vektors mit unterschiedlichen Koeffizienten und anschließender Summation benutzt. Zuerst werden die Gittersegmente des akusto-optischen Modulators bezüglich ihrer Beugungseigenschaften entsprechend den Koeffizienten geladen. Dann werden die Laserdioden getaktet eingeschaltet und der akusto-optische Modulator beleuchtet. Mit der dem akusto-optischen Modulator nachgeordneten Sammellinse werden die unter unterschiedlichen Austrittswinkeln parallel austretenden, in ihrer Intensität veränderten Lichtstrahlen auf nebeneinander in der Brennebene angeordnete Fotodioden fokussiert und ihre Intensitäten addiert.

Aus IBM TECHNICAL DISCLOSURE BULLETIN, Band 22, Nr. 5, Oktober 1979, Seite 2073, IBM Corp., New York, US; C.H. Claasen: « Efficiency stabilization for multi-beam acousto-optic modulators » ist eine Anordnung bekannt, bei der ein akusto-optischer Modulator mit Schallwellen unterschiedlicher Trägerfrequenz angesteuert wird, um einen beleuchtenden Lichtstrahl auf mehrere winkelmäßig getrennte Ausgangslichtstrahlen gleicher Leistung aufzuteilen.

Bei der erfindungsgemäßen Vorrichtung werden durch die unterschiedlichen Trägerfrequenzen der Schallwellen und die zugehörigen Modulationsfrequenzen die gleichzeitige Bildung der Empfangsrichtungen einer Empfangsanlage und ihre räumliche Trennung erzielt, da die den akusto-optischen Modulator verlassenden Lichtstrahlen unterschiedliche Austrittswinkel abhängig von den Tragerfrequenzen aufweisen.

Die Vorteile der erfindungsgemäßen Vorrichtung nach Anspruch 1 und 2 bestehen darin, daß ohne Zwischenspeicherung von Peilergebnissen unmittelbar Peilungen aus sämtlichen Empfangsrichtungen gleichzeitig vorliegen und angezeigt werden. Peiländerungen sind schnell erkennbar. Impulsförmig auftretende Wellenenergie wird unmittelbar detektiert und angezeigt. Ein weiterer Vorteil besteht darin, daß große Datenmengen, wie sie bei einer gleichzeitigen Peilung in unterschiedlichen Empfangsrichtungen bei verlangter hoher Peilgenauigkeit anfallen, parallel in Echtzeit verarbeitet werden können. Die lichtemittierenden Elemente, der akusto-optische Modulator, die Sammellinse und die Sensoren sind als integrierter optischer Baustein herstellbar, so daß ein robuster Aufbau, wie er für den praktischen Einsatz in der Peiltechnik unerläßtlich ist, leicht realisierbar ist. Die Abmessungen dieser optischen Anordnung sind klein im Vergleich zu der Menge der Bauelemente, die für eine andere elektronische Signalverarbeitung notwendig wäre.

Zur Unterscheidung zweier Einfallsrichtungen, die symmetrisch zu der auf der Mitte der Empfangsanordnung errichteten Normalen liegen, und Angabe von bezüglich der Normalen vorzeichenbehafteten Einfallswinkeln wird gemäß Anspruch 1 eine Frequenzanalyse der Ausgangssignale jedes Sensors vorgenommen. Daß eine Frequenzanalyse diese Unterscheidung möglich macht, ergibt sich aus folgenden Überlegungen: Im akusto-optischen Modulator werden die an den einzelnen örtlich nebeneinanderliegenden Empfangswandlern empfangenen, je nach Einfallsrichtung der Wellenenergie gegeneinander phasenverschobenen, schmalbandigen Empfangssignalen mit einer örtlich im akusto-optischen Modulator ebenfalls unterschiedliche Phasenlagen aufweisenden Kosinusfunktion der Modulationsfrequenz multipliziert und mit der nachgeordneten Sammellinse über dem Ort aufintegriert. Für jede Modulationsfrequenz erhält man ein Richtcharakteristik-Signal, das zwei symmetrisch zur Normalen liegenden Einfallsrichtungen der Wellenenergie bekannter Mittenfrequenz zuzuordnen ist.

Das Richtcharakteristik-Signal weist als Variable das Produkt aus Mittenfrequenz der empfangenen Wellenenergie und Sinus des Einfallswinkels geteilt durch die Ausbreitungsgeschwindigkeit der Wellenenergie auf. Dieses Produkt ist die Wellenvektorkomponente der einfallenden Wellenenergie in Richtung der Empfangsanordnung. Durch die Verwendung meherer Modulationsfrequenzen im akusto-optischen Modulator erhält man entsprechend viele Richtcharakteristik-Signale, denen jeweils zwei symmetrisch zur Normalen liegende Einfallsrichtungen zuzuordnen sind. Durch die Signalverarbeitung der Empfangssignale im akusto-optischen Modulator und in der nachgeordneten Sammellinse wird eine Rechenoperation durchgeführt, die mit einer Kosinus-Fourier-Transformation der Antennenbelegung vom Ortsbereich in den Richtungsbereich vergleichbar ist.

Das Richtcharakteristik-Signal weist bei Einfallswinkeln mit gleich großem Betrag, aber unterschiedlichen Vorzeichen unterschiedliche Frequenzen auf. Fällt Wellenenergie aus Einfallsrichtungen ein, deren Wellenvektor eine Komponente in Ausbreitungsrichtung der Schallwelle im akusto-optischen Modulator besitzt so erhält man ein Richtcharakteristik-Signal mit einer Differenzfrequenz aus Mittenfrequenz der Wellenenergie und Modulationsfrequenz, andernfalls mit einer Summenfrequenz aus Mittenfrequenz der Wellenenergie und Modulationsfrequenz. Diesen Frequenzunterschied nutzt die erfindungsgemäße Weiterbildung aus. Hinter jedem Sensor sind zwei Filter vorgesehen, die auf die Differenz- bzw. Summenfrequenz abgestimmt sind. Der Vorteil dieser Anordnung liegt darin, daß durch einfache Bandpaßfilterung oder Demodulation eine eindeutige Bestimmung der Einfallsrichtung möglich ist.

Eine Vereinfachung der gegenüber der in Anspruch 1 angegebenen Signalverarbeitung ist in Anspruch 2 angegeben. Eine Frequenzanalyse für eine eindeutige Peilung wird nicht durchgeführt. Es wird vielmehr eine Duplizierung des optischen Richtungsbildners vorgenommen, indem ein zweiter akusto-optischer Modulator mit lichtemittierenden Elementen vorgesehen wird, der in gleicher Weise wie der erste von den Empfangssignalen der Empfangsanordnung angesteuert wird. In diesem zweiten akusto-optischen Modulator werden die Empfangssignale mit einer bezüglich der Modulationsfrequenz um 90° phasenverschobenen, nicht kosinusförmig, sondern sinusförmig modulierten, trägerfrequenten Schallwelle multipliziert. Jedem akusto-optischen Modulator ist eine Sammellinse und in deren Brennebene eine Anzahl Sensoren angeordnet. Durch Summation und Differenzbildung der beiden so gewonnenen Richtcharakteristik-Signale an den Ausgängen korrespondierender Sensoren erhält man am Ausgang der Differenzschaltung nur ein Ausgangssignal für solche Einfallsrichtungen, deren Wellenvektor eine Wellenvektorkomponente in Ausbreitungsrichtung der Schallwelle in dem betreffenden akusto-optischen Modulator besitzt. Bei Empfang aus der symmetrisch dazu liegenden Einfallsrichtung, deren Wellenvektor eine entgegengesetzt gerichtete Wellenvektorkomponente besitzt, weist der Ausgang der Summenschaltung ein Ausgangssignal auf. Durch einfache Signalverarbeitung ohne Filterung der Ausgangssignale der Sensoren ist somit eine eindeutige Peilung mit der erfindungsgemäßen Weiterbildung möglich.

Die erfindungsgemäße Vorrichtung nach Anspruch 2 ist außerdem besondere vorteilhaft für eine Zielverfolgung einsetzbar. Nach Detektion eines Ziels unter einer Einfallsrichtung wird die zugehörige Modulationsfrequenz so erhöht oder erniedrigt, daß durch ihre Variation eine Schwenkung der Einfallsrichtung innerhalb eines Sektors zwischen zwei durch fest eingestellte Modulationsfrequenzen definierte Einfallsrichtung erreicht wird. Es wird das Ausgangssignal derjenigen Summen- oder Differenzschaltung beobachtet, bei der daß Ziel detektiert wurde. Bleibt das Ausgangssignal konstant, so stimmt die Schwenkung der Einfallsrichtung mit der Zielbewegung überein. Trotz Erhöhung oder Erniedrigung der Modulationsfrequenz brauchen keine Filtereinrichtungen durchgestimmt werden, da allein durch Summen- oder Differenzbildung der Ausgangssignale der Sensoren eine eindeutige Richtungsbestimmung möglich ist.

Eine vorteilhafte Weiterbildung des erfindungsgemäßen Verfahrens ist in Anspruch 3 für eine Richtungsbildung in Azimut und Elevation angegeben. Die Empfangswandler sind in einer Ebene angeordnet, beispielsweise in nebeneinanderliegenden, horizontalen Reihen und vertikalen Spalten. Der akusto-optische Modulator ist zweidimensional akustisch beeinflußbar. Abhängig von der gewählten Konfiguration der Empfangswandler kann vertikal und horizontal ein unterschiedliches Bündelungsmaß erzielt werden. Mit dem akusto-optischen Modulator wird in horizontaler und vertikaler Richtung eine unterschiedliche Zahl von Richtungskanälen gebildet. Die Anzahl der Empfangsrichtungen ist gleich dem Produkt der Richtungskanalzahlen in beiden Richtungen.

Die Richtungskanäle in den beiden Richtungen können auch durch gleiche Trägerfrequenzen und Modulationsfrequenzen gebildet werden, so daß die Zahl an Trägerfrequenzmodulatoren entsprechend Anspruch 4 durch die größere Zahl an Richtungskanälen in der einen Richtung bestimmt wird und die gleichen Trägerfrequenzmodulatoren zum Bilden der Richtungskanäle in der anderen Richtung mit benutzt werden.

Besonders einfach ist die Richtungsbildung für eine in x- und y-Richtung quadratische Empfangsanordnung, mit der Einfallsrichtungen symmetrisch in x- und y-Richtung, nämlich unter gleich großen Einfallswinkeln gegen das Lot auf die Mitte der Empfangsanordnung gebildet werden. Bei Anwendung der vorteilhaften Weiterbildung der Erfindung, die in Anspruch 5 angegebenen ist, reduziert sich die Zahl der Trägerfrequenzmodulatoren im Signalgenerator auf die Hälfte und ist gleich groß wie bei einer Richtungsbildung nur in Azimut bzw. Elevation.

Ein wesentlicher Vorteil der Vorrichtungen nach Anspruch 3 und 4 besteht darin, daß die Plazierung der Empfangswandler auf der Empfangsanordnung abhängig vom gewünschten Nebenzipfelverhalten vorgenommen werden kann, also frei und nicht nur äquidistant in den Reihen und Spalten gewählt werden kann.

Die Vorteile der erfindungsgemäßen Vorrichtung gemäß Anspruch 3 und 4 bestehen weiterhin auch darin, daß Richtcharakteristiken mit wählbarer Bündelung in horizontaler und vertikaler Richtung durch unterschiedliche Brechungsindexmodulation für beliebige Raumwinkel simultan gebildet werden, so daß eine Raumüberwachung in Azimut und Elevation gewährleistet ist. Mit solchen Vorrichtungen ist bei Anwendung in der Sonartechnik nicht nur eine Angabe über die Peilung, sondern auch über Tauchtiefen von U-Booten möglich, oder bei Verwendung einer aktiven Sonaranlage mit einem Empfangsteil entsprechend der erfindungsgemäßen Vorrichtung eine Lokalisierung beispielsweise von Ankertauminen durchführbar.

Eine Verbesserung der Richtungsbildung wird mit der vorteilhaften Weiterbildung der erfindungsgemäßen Vorrichtung nach Anspruch 5 auf optischem Wege realisiert, indem beispielsweise ein Dia vor dem akustooptischen Modulator angeordnet ist, dessen Transparenz nach außen hin abnimmt. Dadurch wird bewirkt, daß Empfangssignale der außen liegenden Empfangswandler stärker gedämpft werden als solche, die von Empfangswandlern in der Mitte der Empfangsanordnung empfangen werden. Diese Art der Amplitudenbewertung ist besonders vorteilhaft, da sie durch Einsatz eines entsprechenden Dias jederzeit auch austauschbar ist. Sie bewirkt eine Nebenzipfeldämpfung für die Richtcharakteristiken.

Bei Einsatz eines integrierten optischen Bausteins als Richtungsbildner wird die Amplitudenbewertung durch eine entsprechende ortsabhängige Intensitätsdämpfung innerhalb des Bausteins vorgenommmen.

Die Erfindung ist anhand von in der Zeichnung dargestellten Ausführungsbeispielen näher beschrieben. Es zeigen:

Fig. 1 eine Prinzipskizze einer Vorrichtung zur Richtungsbildung,

Fig. 2 eine Modifizierung der Vorrichtung gemäß Fig. 1,

Fig. 3 eine Prinzipskizze einer Vorrichtung zur zweidimensionalen Richtungsbildung.

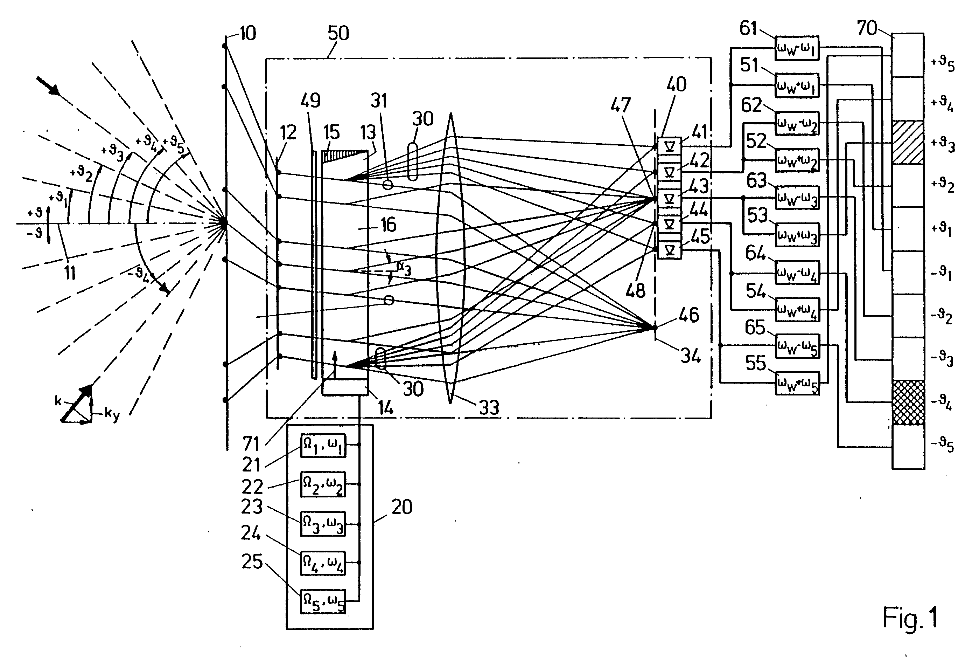

Wellenenergie aus zwei mit Pfeilen gekennzeichneten Einfallsrichtungen wird von Empfangswandlern einer Empfangsanordnung 10 gemäß Fig. 1 empfangen. Gegen die zentrale Normale 11, die auf der Mitte der Empfangsanordnung 10 errichtet ist, weist die eine Einfallsrichtung einen Winkel $+ \vartheta_3$ auf, die andere Einfallsrichtung einen Winkel $- \vartheta_4$. Die empfangswandler längs einer Geraden sind in einer Reihe angeordnet. Ihre Abstände zueinander sind ungleich und abhängig von der Form der Richtcharakteristiken gewählt. Ebenfalls wäre auch eine Empfangsanordnung mit äquidistant angeordneten Wandlern möglich.

Empfangssignale der Empfangswandler der Empfangsanordnung 10 werden in nachgeschalteten, lichtemittierenden Elementen einer Anordnung 12 in Lichtintensitäten umgewandelt. Die Elemente auf der Anordnung 12 strahlen Licht ab, dessen Intensität mit der Amplitude der Empfangssignale moduliert ist. Die Elemente der Anordnung 12 sind in gleicher Weise wie die Empfangswandler der Empfangsanordnung 10 jedoch in verkleinertem Maßstab angeordnet, beispielsweise mit einer Maßstabsverkleinerung von 1 : 100. Zur übersichtlicheren Darstellung ist hier ein anderer Maßstabsfaktor gewählt.

Der Anordnung 12 ist ein akusto-optischer Modulator 13 nachgeordnet. Der akusto-optische Modulator 13 weist einen Schallgeber 14, einen Absorber 15 und einen dazwischen angeordneten Kristall 16 auf. Der Kristall 16 ist quer zur Durchleuchtungsrichtung des Lichts mit Schallwellen beaufschlagt. Der Absorber 15 sorgt dafür, daß die vom Schallgeber 14 abgegebenen Schallwellen keine stehenden Wellen im Kristall 16 bilden.

Der Schallgeber 14 ist mit einem Signalgenerator 20 verbunden. Der Signalgenerator 20 enthält fünf Trägerfrequenzmodulatoren 21, 22, 23, 24, 25 zum Bilden von fünf Empfangsrichtungen, die gegen die Normale 11 jeweils zwei gleich große Winkel $\pm \vartheta_1$, $\pm \vartheta_2$, $\pm \vartheta_3$, $\pm \vartheta_4$, $\pm \vartheta_5$ aufweisen. In den Trägerfrequenzmodulatoren 21 bis 25 werden fünf verschiedene Trägerfrequenzen $\Omega_1$, $\Omega_2$, $\Omega_3$, $\Omega_4$, $\Omega_5$ mit fünf verschiedenen, ggf. variierbaren Modulationsfrequenzen $\omega_1$, $\omega_2$, $\omega_3$, $\omega_4$, $\omega_5$ amplitudenmoduliert. Die Trägerfrequenzmodulatoren 21 bis 25 sind mit dem Schallgeber 14 verbunden und erzeugen im Kristall 16 eine Brechungsindexmodulation entsprechend den fünf mit den Modulationsfrequenzen $\omega_1$ bis $\omega_5$ modulierten, trägerfrequenten Schallwellen. Die Trägerfrequenzen $\Omega_1$ bis $\Omega_5$ sorgen dafür, daß das einfallende Licht den Kristall 16 des akusto-optischen Modulatos 13 unter unterschiedlichen Austrittswinkeln $\alpha_1$ bis $\alpha_5$ wieder verläßt. Solche Strahlenbündel 30 sind beispielhaft für Lichtstrahlen, die vom ersten und letzten Element auf der Anordnung 12 stammen, dargestellt. Das Strahlenbündel 30 umfaßt nur Lichtstrahlen der ersten Beugungsordnung. Lichtstrahlen der nullten Beugungsordnung sind mit 31 gekennzeichnet, sie verlassen den Kristall 16 des akusto-optischen Modulators 13 mit unveränderter Richtung. Für die Lichtstrahlen der anderen Elemente der Anordnung 12 ist nur jeweils einer der austretenden Lichtstrahlen erster Beugungsordnung unter dem Austrittswinkel $\alpha_3$ der fünf möglichen Austrittswinkel $\alpha_1$, $\alpha_2$, $\alpha_3$, $\alpha_4$, $\alpha_5$ gezeigt, da sonst die Zeichnung zu unübersichtlich werden würde.

Zur Richtungsbildung für eine Empfangsrichtung der Wellenenergie unter einem Winkel $|\vartheta_3|$ wird die Modulationsfrequenz

$$\omega_3 = \frac{\omega_w}{c_w} \cdot \frac{1}{M} \cdot c_k \cdot \sin |\vartheta_3|$$

im Signalgenerator 20 abhängig von der Mittenfrequenz $\omega_w$ der empfangenen Wellenenergie und ihrer Ausbreitungsgeschwindigkeit $c_w$, dem Maßstabsfaktor M ($M \ll 1$) zwischen Empfangsanordnung 10 und Anordnung 12, der Schallausbreitungsgeschwindigkeit $c_k$ der Schallwelle im akusto-optischen Modulator 13 und dem Sinus des Betrages des Winkels $\vartheta_3$ eingestellt. Die mit der Modulationsfrequenz $\omega_3$ modulierte Schallwelle bewirkt eine solche Brechungsindexmodulation im Kristall des akusto-optischen Modulators 13, daß das Fortschreiten der Schallwelle im Kristall und das Fortschreiten einer Komponente der unter dem Winkel $+ \vartheta_3$ empfangenen Wellenenergie entlang des Empfangsanordnung 10 synchron erfolgt.

Sämtliche Lichtstrahlen, die zu der Empfangsrichtung unter dem Winkel $+ \vartheta_3$ gehören, verlassen unter dem Austrittswinkel $\alpha_3$ parallel der akusto-optischen Modulator 13. Der Austrittswinkel $\alpha_3$ wird durch die Trägerfrequenz $\Omega_3$ eingestellt. Durch Verwendung von fünf unterschiedlichen Trägerfrequenzen $\Omega_1$ bis $\Omega_5$ entstehen fünf parallele Lichtstrahlenbündel.

Dem akusto-optischen Modulator 13 ist eine Sammellinse 33 nachgeordnet, in deren Brennebene 34 sich eine Sensoranordnung 40 befindet. Fünf lichtempfindliche Sensoren 41, 42, 43, 44, 45 sind in den fünf Brennpunkten der durch die Sammellinse 33 fokussierten Lichtstrahlenbündel angeordnet.

Im Brennpunkt 46 sammeln sich die Lichtstrahlen nullter Beugungsordnung. Im Brennpunkt 47 werden die unter dem Austrittswinkel $\alpha_3$ austretenden Lichtstrahlen fokussiert. Trägerfrequenz $\Omega_3$ und Modulationsfrequenz $\omega_3$ kann man als Richtungskanal für die Empfangsrichtung unter dem Winkel $|\vartheta_3|$ bezeichnen. Das Ausgangssignal des Sensors 43 im Brennpunkt 47 repräsentiert die aus dieser Empfangsrichtung empfangene Wellenenergie.

Das Ausgangssignal des Sensors 44 im Brennpunkt 48 ist einer Richtcharakteristik zuzuordnen, die durch den Richtungskanal mit der Trägerfrequenz $\Omega_4$ und der Modulationsfrequenz $\omega_4$ gebildet wird und Wellenenergie aus der Empfangsrichtung unter den Winkeln $\pm \vartheta_4$ empfängt.

Zur Verbesserung der mit einem solchen Richtungsbildner 50 gebildeten fünf Richtcharakteristiken ist vor dem akusto-optischen Modulator 13 ein Dia 49 angeordnet mit einer Schwärzungsverteilung, die ein « shading » der Richtcharakteristik bewirkt.

Zur Trennung der mit diesem Richtungsbildner 50 gebildeten Empfangsrichtungen in zwei symmetrisch zur Normalen 11 liegende Einfallsrichtungen der Wellenenergie sind den Sensoren 41 bis 45 Bandpässe 51 bis 55 und 61 bis 65 nachgeschaltet.

Die Mittenfrequenz $\omega_w$ der empfangenen Wellenenergie, die durch das interessierende Nutzsignal des Ziels bestimmt sind, und die verschiedenen Modulationsfrequenzen $\omega_1$ bis $\omega_5$ werden zu einer Summenfrequenz, z. B. ($\omega_w + \omega_1$), und einer Differenzfrequenz, z. B. ($\omega_w - \omega_1$), zusammengefaßt. Die Bandpässe 51 bis 55 weisen als Durchlaßbereich die Summenfrequenzen auf, die Bandpässe 61 bis 65 haben einen Durchlaßbereich für die Differenzfrequenzen. Mit den Bandpässen 51 bis 55 und 61 bis 65 wird der Frequenzinhalt der Ausgangssignale der Sensoranordnung 40 geprüft. Das Ausgangssignal des Sensors 43 weist die Summenfrequenz ($\omega_w + \omega_3$) auf und erzeugt am Ausgang des Bandpasses 53 ein Signal, das auf einer nachgeordneten Richtungsanzeige 70 auf einem Anzeigeelement $+ \vartheta_3$ angezeigt wird.

Am Ausgang des Sensors 44 wird die Differenzfrequenz $\omega_w - \omega_4$ vom Bandpaß 64 durchgelassen und läßt die Richtungsanzeige 70 bei der Markierung $- \vartheta_4$ aufleuchten.

Die Differenzfrequenzen ($\omega_w - \omega_1$), ..., ($\omega_w - \omega_5$) kennzeichnen negative Winkel $- \vartheta$ und somit Einfallsrichtungen, die links von der Normalen 11 liegen, da der Wellenvektor k der einfallenden Wellenenergie eine Wellenvektorkomponente $k_y$ besitzt, die in Ausbreitungsrichtung 71 der Schallwellen im akusto-optischen Modulator 13 weist. Die Summenfrequenzen ($\omega_w + \omega_1$), ..., ($\omega_w + \omega_5$) kennzeichnen positive Winkel $+ \vartheta$ und somit Einfallsrichtungen, die rechts von der Normalen 11 liegen, da die zugehörige Wellenvektorkomponente $k_y$ ein anderes Vorzeichen besitzt.

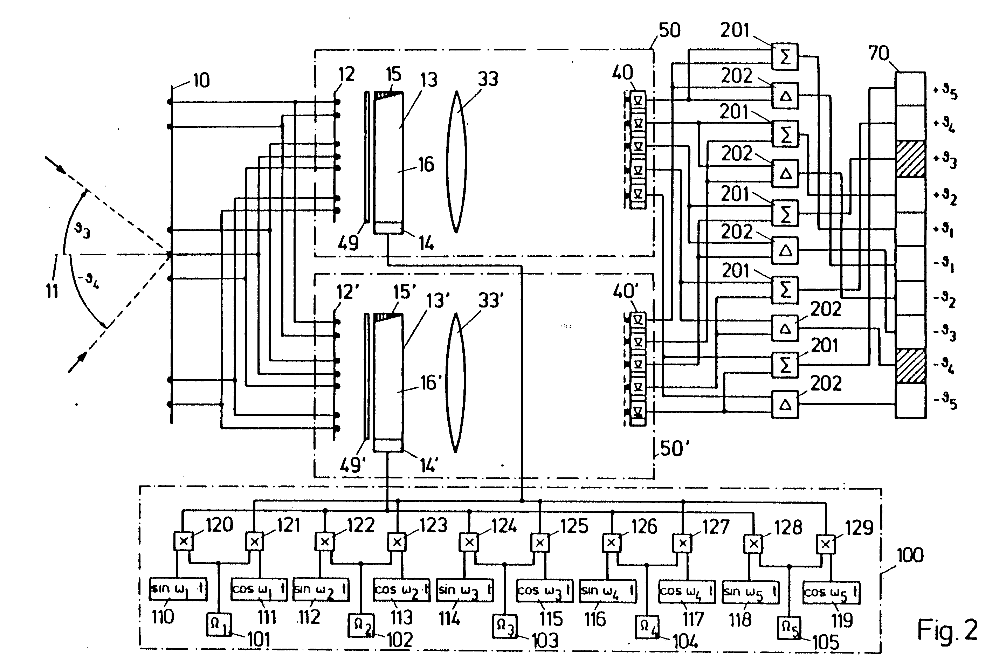

Fig. 2 zeigt eine andere Möglichkeit der Signalnachverarbeitung zur Trennung der Empfangsrichtungen in symmetrisch zur Normalen 11 liegende Einfallsrichtungen. Der Empfangsanordnung 10 sind zwei gleiche optische Richtungsbildner 50 und 50' nachgeordnet, die beide aus solchen Bauelementen 12, 12', 13, 13', 33, 33', 40, 40' aufgebaut sind, wie sie bereits im Zusammenhang mit Fig. 1 beschrieben wurden. Die lichtemitierenden Elemente auf den Anordnungen 12 und 12' werden von den Empfangssignalen der Empfangswandler auf der Empfangsanordnung 10 angesteuert, die von ihnen abgestrahlte Lichtintensität ist entsprechend den Empfangssignalen moduliert.

Die optischen Richtungsbildner 50 und 50' sind mit einem Signalgenerator 100 verbunden. Der Schallgeber 14 des akusto-optischen Modulators 13 im Richtungsbildner 50 wird mit einem Signalgemisch an einem Ausgang des Signalgenerators 100 aus kosinusförmig amplitudenmodulierten Trägerfrequenzschwingungen angesteuert. Der akusto-optische Modulator 13' im Richtungsbildner 50' wird dagegen mit einem Signalgemisch am zweiten Ausgang des Signalgenerators 100 angesteuert, dessen Trägerfrequenzsignale sinusförmig amplitudenmoduliert sind.

Der Signalgenerator 100 enthält Trägerfrequenzgeneratoren 101 bis 105, die die Trägerfrequenzen $\Omega_1$ bis $\Omega_5$ bereitstellen. Von jeder Modulationsfrequenz $\omega_1$ bis $\omega_5$ werden zwei um 90° gegeneinander verschobene Spannungen in Modulationsfrequenzgeneratoren 110 bis 119 erzeugt, die mit Trägerfrequenzmodulatoren 120 bis 129 verbunden sind. Die Trägerfrequenzmodulatoren 120 und 121 sind außerdem mit dem Trägerfrequenzgenerator 101 verbunden. Die gleiche Zusammenschaltung ist für die Trägerfrequenzgeneratoren 102 bis 105 mit den Trägerfrequenzmodulatoren 122 bis 129 vorgesehen. Sämtliche Ausgänge der Trägerfrequenzmodulatoren mit geradzahligen Bezugszeichen 120, 122, 124, ..., 128 bilden denjenigen Ausgang des modifizierten Signalgenerators 100, der mit dem Schallgeber 14' des akusto-optischen Modulators 13' im Richtungsbildner 50' verbunden ist. Die Ausgänge der Trägerfrequenzmodulatoren mit ungeradzahligen Bezugszeichen 121, 123, ..., 129 bilden den anderen Ausgang, der mit dem Schallgeber 14 des akusto-optischen Modulators 13 im Richtungsbildner 50 verbunden ist.

Die Ausgangssignale an der Sensoranordnung 40 des Richtungsbildners 50 sind bezüglich ihres Frequenzspektrums identisch mit denen in Fig. 1. Sie enthalten ebenso wie die Ausgangssignale der Sensoranordnung 40' Frequenzanteile mit der Summen- und Differenzfrequenz aus Mittenfrequenz der Wellenenergie und Modulationsfrequenz. Jeder durch den Richtungsbildner 50 und 50' gebildete gleiche Richtungskanal wird in einer nachfolgenden Signalverarbeitung addiert und subtrahiert. Jedem Sensor der Sensoranordnung 40 ist eine Summenschaltung 201 und eine Differenzschaltung 202 nachgeordnet. An den Ausgängen der Summenschaltungen 201 erscheinen Ausgangssignale, die nur die Summenfrequenz aufweisen und abhängig von der Modulationsfrequenz $\omega$ positive Winkel $+ \vartheta$ kennzeichnen. Bei der Differenzbildung der Ausgangssignale korrespondierender Richtungskanäle erhält man als Ergebnis Ausgangssignale mit der Differenzfrequenz, die negative Winkel $- \vartheta$ abhängig von der Modulationsfrequenz $\omega$ kennzeichnen.

Die Summen- und Differenzschaltungen 201 und 202 weisen nur dann ein Ausgangssignal auf, wenn aus der entsprechenden Einfallsrichtung Wellenenergie empfangen wird. Sämtliche Summenschaltungen 201 sind mit positiven Winkelanzeigen $+ \vartheta$ und sämtliche Differenzschaltungen 202 mit negativen Winkelanzeigen $- \vartheta$ auf der Richtungsanzeige 70 verbunden.

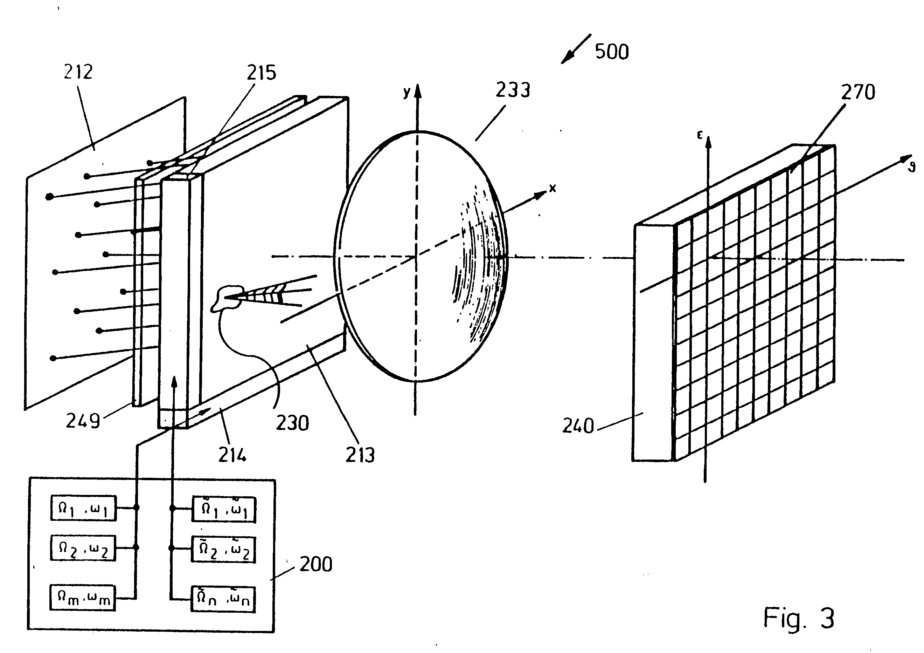

Fig. 3 zeigt einen zweidimensionalen optischen Richtungsbildner 500 mit Richtungsanzeige 270, mit dem nicht nur Einfallsrichtungen von Wellenenergie in einer Ebene festgestellt werden, sondern Richtcharakteristiken mit einstellbarem Raumwinkel gebildet werden, die in Azimut und Elevation eine gewünschte Bündelung — auch unterschiedlicher Schärfe — aufweisen. Es ist eine ebene Anordnung 212 mit lichtemittierenden Elementen vorgesehen, die in verkleinertem Maßstab de ebenfalls als ebene Fläche ausgebildeten Empfangsanordnung entspricht, die hier nicht gezeigt wird. Die lichtemittierenden Elemente werden von den Empfangswandlern angesteuert. Der Anordnung 212 ist ein akusto-optischer Modulator 213 nachgeordnet, der über zwei Schallgeber 214, 215 in x- und y-Richtung jeweils mit Schallwellen senkrecht zur Durchleuchtungsrichtung modulierbar ist. Die Schallgeber 214 und 215 sind mit einem Signalgenerator 220 verbunden, der $(m + n)$ Trägerfrequenzen und Modulationsfrequenzen zum Bilden von m Richtungskanälen in x-Richtung und n Richtungskanälen in y-Richtung bereitstellt. Sein Aufbau entspricht dem in Fig. 1 dargestellten Signalgenerator 20 in doppelter Ausführung.

Bei einem quadratischen Aufbau der Anordnung 212 in x- und y-Richtung symmetrischer Richtungsbildung und einer gleichen Winkelauflösung in x- und y-Richtung befinden sich im Signalgenerator 220 nur m Trägerfrequenzmodulatoren, beispielsweise fünf, wie im Signalgenerator 20 in Fig. 1, die mit beiden Schallgebern 214, 215 verbunden sind. Es werden hiermit symmetrisch zur Mittelsenkrechten auf die Empfangsanordnung jeweils fünf Empfangsrichtungen unter gleichem Winkel zur x- und y-Richtung eingestellt. Mit dem akusto-optischen Modulator 213 sind somit insgesamt $5 \times 5 = 25$ Richtungskanäle aufbaubar, die $10 \times 10 = 100$ Einfallsrichtungen der Wellenenergie unterscheidbar machen.

Wenn nur einer der beiden Schallgeber 214 oder 215 aktiviert wird, treten — wie bei Fig. 1 gezeigt — hinter dem akusto-optischen Modulator 213 fünf Lichtstrahlen erster Beugungsordnung in x- oder y-Richtung jeweils unter fünf unterschiedlichen Austrittswinkeln auf, die durch die fünf Trägerfrequenzen $\Omega_1, ..., \Omega_5$ im Signalgeber 220 erzeugt werden. Wenn gleichzeitig über die Schallgeber 214 und 215 sämtliche $5 + 5 = 10$ trägerfrequenzmodulierten Schallwellen im akusto-optischen Modulator 213 wirksam werden, entsteht hinter dem akusto-optischen Modulator 213 ein Lichtstrahlenmuster, das je Lichtstrahlenbündel 230 aus $5 \times 5 = 25$ Lichtstrahlen erster Beugungsordnung besteht.

Vor dem akusto-optischen Modulator 213 befindet sich ein Dia 249, das eine Schwärzungsverteilung entsprechend einer gewünschten Amplitudenstaffelung aufweist. Eine dem akusto-optischen Modulator 213 nachgeordnete Sammellinse 233 bündelt parallele Lichtstrahlen in ihrer Brennebene. Die gebündelten Lichtstrahlen erzeugen $5 \times 5 = 25$ Brennpunkte in der Brennebene, die den fünfundzwanzig Riohtungskanälen entsprechen.

In den Brennpunkten befinden sich fünfundzwanzig Sensoren. Jedem Sensor sind vier Filter nachgeordnet, mit denen festgestellt wird, in welchem Quadranten im x-y-Koordinatensystem die Einfallsrichtung der Wellenenergie liegt. Sensoren und Filter bilden eine quadratische Matrix 240.

Für eine Vorzeichenunterscheidung in x-Richtung sind jedem Sensor je zwei Filter zur Trennung zwischen Summen- und Differenzfrequenz nachgeordnet, wobei die Summen- und Differenzfrequenz zwischen der Mittenfrequenz $\omega_w$ der Wellenenergie und den Modulationsfrequenzen $\omega_1, ..., \omega_m$ im Signalgenerator 220 liegen. Zur Vorzeichenunterscheidung in y-Richtung ist jeder Sensor mit zwei weiteren Filtern verbunden, die die Summen- und Differenzfrequenz zwischen der Mittenfrequenz $\omega_w$ der Wellenenergie und den Modulationsfrequenzen $\tilde{\omega}_1, ..., \tilde{\omega}_n$ im Signalgenerator 220 trennen. Die Filter sind so aufgebaut, wie dies bereits im Zusammenhang mit Fig. 1 erläutert wurde.

Die Matrix 240 ist mit einer Richtungsanzeige 270 mit $10 \times 10 = 100$ Feldern zur Anzeige von hundert unterschiedlichen Raumwinkeln in Azimut $\vartheta$ und Elevation $\varepsilon$ verbunden, auf der die Einfallsrichtung der Wellenenergie sichtbar gemacht wird.

Eine eindeutige Raumwinkelpeilung ist auch mit einer Anordnung, wie sie in Fig. 2 für die azimutale Richtungsbildung beschrieben ist, möglich. Dafür müßte der zweidimensionale Richtungsbildner 500 zweimal aufgebaut werden und die Sensorausgangssignale in der Weise verarbeitet werden, wie es in Fig. 2 für die azimutale Richtungsbildung beschrieben ist. Der Signalgenerator 220 wäre dann genauso aufzubauen, wie der Signalgenerator 100 in Fig. 2 und die Filterschaltungen in der Matrix 240 zu ersetzen durch Summe/Differenzschaltungen, wie dies im Zusammenhang mit Fig. 2 beschrieben wurde.

**Patentansprüche**

1. Vorrichtung zur Empfangsrichtungsbestimmung beim Empfang von Wellenenergie bekannter Mittenfrequenz und Bandbreite mit einer mehrere Empfangswandler aufweisenden Empfangsanordnung (10) und den Empfangswandlern nachgeschalteten, von ihnen angesteuerten, lichtemittierenden Elementen (12), deren geometrische Anordnung der Empfangsanordnung im verkleinerten Maßstab entspricht, mit mindestens einem den Elementen nachgeordneten akusto-optischen Modulator (13), der mit einem Signalgenerator (20) zusammengeschaltet und mit modulierten, trägerfrequenten Schallwellen quer zur Durchleuchtungsrichtung beaufschlagt ist, die eine Modulationsfrequenz entsprechend der gewünschten, momentan zu bildenden Empfangsrichtung aufweisen, sowie mit einer dem akusto-optischen Modulator nachgeordneten Sammellinse (33), dadurch gekennzeichnet, daß der Signalgenerator (20; 100; 200) Trägerfrequenzmodulatoren (21, 22, ..., 25 bzw. 120, 121, ..., 129) für eine Anzahl von den zu bildenden Empfangsrichtungen zugeordneten, fest eingestellten, unterschiedlichen Trägerfrequenzen $(\Omega_1, ..., \Omega_5)$ und für eine gleiche Anzahl einstellbare Modulationsfrequenzen $(\omega_1, ..., \Omega_5)$ aufweist, wobei jede Trägerfrequenz $(\Omega_1, ..., \Omega_5)$ zusammen mit der Modulationsfrequenz $(\omega_1, ..., \omega_5)$ einen Richtungskanal bildet, und daß hinter der Sammellinse (33; 233) an Brennpunkten von den Richtungskanälen zugeordneten Lichtstrahlbündeln eine gleiche Anzahl lichtempfindlicher Sensoren (40) angeordnet ist, daß jedem Sensor (40, 41, ..., 45) zwei Filter (51, ..., 55, 61, ..., 65) nachgeordnet sind, daß das eine Filter (51, ..., 55) zum Durchlassen der Summenfrequenz $(\omega_W + \omega_1 ; ..., \omega_W + \omega_5)$ aus Modulationsfrequenz $(\omega_1, ..., \omega_5)$ und Mittenfrequenz $(\omega_W)$ der Wellenenergie und das andere Filter (61, ..., 65) zum Durchlassen der Differenzfrequenz $(\omega_W - \omega_1, ..., \omega_W - \omega_5)$ aus Mittenfrequenz $(\omega_W)$ der Wellenenergie und Modulationsfrequenz $(\omega_1, ..., \omega_5)$ ausgebildet ist und daß jedes Filter (51, ..., 55, 61, ..., 65) mit einer Richtungsanzeige (70, 270) verbunden ist.

2. Vorrichtung zur Empfangsrichtungsbestimmung beim Empfang von Wellenenergie bekannter Mittenfrequenz und Bandbreite mit einer mehrere Empfangswandler aufweisenden Empfangsanordnung (10) und den Empfangswandlern nachgeschalteten, von ihnen angesteuerten, lichtemittierenden Elementen, deren geometrische Anordnung der Empfangsanordnung im verkleinerten Maßstab entspricht, mit mindestens einem ersten den Elementen nachgeordneten akusto-optischen Modulator (13), der mit einem Signalgenerator zusammengeschaltet und mit modulierten, trägerfrequenten Schallwellen quer zur Durchleuchtungsrichtung beaufschlagt ist, die eine Modulationsfrequenz entsprechend der gewünschten, momentan zu bildenden Empfangsrichtung aufweisen, sowie mit einer ersten dem akusto-optischen Modulator nachgeordneten Sammellinse (33), dadurch gekennzeichnet, daß ein zweiter akusto-optischer Modulator (13') mit einer zweiten nachgeordneten Sammellinse (33') vorgesehen ist, daß der Signalgenerator (20 ; 100 ; 200) zwei Trägerfrequenzmodulatoren (21, 22, ..., 25 und 120, 121, ..., 129) für eine Anzahl von den zu bildenden Empfangsrichtungen zugeordneten, fest eingestellten, unterschiedlichen Trägerfrequenzen $(\Omega_1, ..., \Omega_5)$ und für eine gleiche Anzahl einstellbare Modulationsfrequenzen $(\omega_1, ..., \omega_5)$ aufweist, wobei jede Trägerfrequenz $(\Omega_1, ..., \Omega_5)$ zusammen mit der Modulationsfrequenz $(\omega_1, ..., \omega_5)$ einen Richtungskanal bildet, daß hinter jeder Sammellinse (33 ; 233) an Brennpunkten von den Richtungskanälen zugeordneten Lichtstrahlbündeln eine gleiche Anzahl lichtempfindlicher Sensoren (40, 40') vorgesehen sind, daß der erste akusto-optische Modulator (13) mit einem ersten Ausgang des Signalgenerators (100) und der zweite akusto-optische Modulator (13') mit einem zweiten Ausgang des Signalgenerators (100) verbunden ist, daß eine erste Hälfte der Trägerfrequenzmodulatoren (120, 122, 124, 126, 128) mit Schwingungen der Trägerfrequenzen $(\Omega_1, ..., \Omega_5)$ und mit Sinusschwingungen der Modulationsfrequenzen $(\omega_1, ..., \omega_5)$ und die andere Hälfte der Trägerfrequenzmodulatoren (121, 123, 125, 127, 129) mit Schwingungen der gleichen Trägerfrequenzen $(\Omega_1, ..., \Omega_5)$ und mit Cosinusschwingungen der gleichen Modulationsfrequenzen $(\omega_1, ..., \omega_5)$ beaufschlagt ist, daß Ausgänge der Trägerfrequenzmodulatoren (129, 122, ...) der ersten Hälfte den einen Ausgang des Signalgenerators (100) und Ausgänge der Trägerfrequenzmodulatoren (121, 123, ...) der anderen Hälfte den zweiten Ausgang des Signalgenerators (100) bilden und daß die zum gleichen Richtungskanal gehörenden Sensoren (40, 40') jeweils mit einer Summen- und einer Differenzschaltung (201, 102) mit nachgeschalteter Richtungsanzeige (70) verbunden sind.

3. Vorrichtung nach Anspruch 1 oder 2, dadurch gekennzeichnet, daß die Empfangswandler in einer Ebene angeordnet sind, daß jeweils der akusto-optische Modulator (213) in zwei Richtungen (x, y) quer zur Durchleuchtungsrichtung akustisch beeinflußbar ist und zwei Schallgeber (214, 215) aufweist, daß der Signalgenerator (200) zum Bilden von m Richtungskanälen in der einen Richtung (x) m Trägerfrequenzen $(\Omega_1, \Omega_2, ..., \Omega_m)$ und Modulationsfrequenzen $(\omega_1, \omega_2, ..., \omega_m)$ und zum Bilden von n Richtungskanälen in der anderen Richtung (y) n Trägerfrequenzen $(\tilde{\Omega}_1, \tilde{\Omega}_2, ..., \tilde{\Omega}_n)$ und Modulationsfrequenzen $(\tilde{\omega}_1, \tilde{\omega}_2, ..., \tilde{\omega}_n)$ aufweist, daß die Trägerfrequenzmodulatoren für die m Richtungskanäle mit dem einen Schallgeber (214) und die Trägerfrequenzmodulatoren für die n Richtungskanäle mit dem anderen Schallgeber (215) verbunden sind und daß die Anzahl der Empfangsrichtungen gleich dem Produkt m · n der Richtungskanäle in beiden Richtungen (x, y) ist.

4. Vorrichtung nach Anspruch 3, dadurch gekennzeichnet, daß jeder akusto-optische Modulator (213) horizontal und vertikal akustisch beeinflußbar ist und zwei in vertikaler und horizontaler Richtung abstrahlende Schallgeber (214, 125) aufweist, daß zum Bilden der Richtungskanäle in horizontaler und vertikaler Richtung gleiche Träger- und Modulationsfrequenzen verwendet werden.

5. Vorrichtung nach einem der Ansprüche 1 bis 4, dadurch gekennzeichnet, daß vor dem akusto-optischen Modulator (13, 13', 213) eine Platte (Dia 49, 49', 249) aus lichtdurchlässigem Material angeordnet ist und daß die Platte (Dia 49, 49', 249) eine Schwärzungsverteilung aufweist, die einer gewünschten Amplitudenbewertung der Empfangssignale entspricht.


## Claims

1. Device for determining the direction of reception in the reception of wave energy of known centre frequency and bandwidth, comprising a receiving arrangement (10) exhibiting several receiving transducers, and comprising light-emitting elements (12) which follow the receiving transducers and are actuated by them, the geometric arrangement of which elements corresponds to the receiving arrangement on a reduced scale, having at least one acousto-optical modulator (13) which follows the elements and which is connected together with a signal generator (20) and to which modulated carrier-frequency sound waves are applied transversely to the direction of light transmission, which sound waves exhibit a modulation frequency corresponding to the required directions of reception to be instantaneously formed, and comprising a collecting lens (33) which follows the acousto-optical modulator, characterized in that the signal generator (20 ; 100 ; 200) exhibits carrier-frequency modulators (21, 22, ..., 25 and 120, 121, ..., 129) for a number of different preset carrier frequencies ($\Omega_1$, ..., $\Omega_5$) which are allocated to the directions of reception to be formed, and for an equal number of adjustable modulation frequencies ($\omega_1$, ..., $\omega_5$), each carrier frequency ($\Omega_1$, ..., $\Omega_5$) forming, together with the modulation frequency ($\omega_1$, ..., $\omega_5$), a direction channel, and in that behind the collecting lens (33 ; 233) an equal number of light-sensitive sensors (40) is arranged at focal points of light beam bundles allocated to the direction channels, in that each sensor (40, 41, ..., 45) is followed by two filters (51, ..., 55, 61, ..., 65), in that one filter (51, ..., 55) is designed to pass the sum frequency ($\omega_w + \omega_1$ ;..., $\omega_w + \omega_5$) of modulation frequency ($\omega_1$, ..., $\omega_5$) and centre frequency ($\omega_w$) of the wave energy and the other filter (61, ..., 65) is designed to pass the difference frequency ($\omega_w - \omega_1$, ..., $\omega_w - \omega_5$) of centre frequency ($\omega_w$) of the wave energy and modulation frequency ($\omega_1$, ..., $\omega_5$), and in that each filter (51, ..., 55, 61, ..., 65) is connected to a direction indicator (70, 270).

2. Device for determining the direction of reception in the reception of wave energy of known centre frequency and bandwidth, comprising a receiving arrangement (10) exhibiting several receiving transducers, and comprising light-emitting elements which follow the receiving transducers and are actuated by them, the geometric arrangement of which elements corresponds to the receiving arrangement on a reduced scale, having at least one first acousto-optical modulator (13) which follows the elements and which is connected together with a signal generator and to which modulated, carrier-frequency sound waves are applied transversely to the direction of light transmission, which sound waves exhibit a modulation frequency corresponding to the required direction of reception to be instantaneously formed, and comprising a first collecting lens (33) which follows the acousto-optical modulator, characterized in that a second acousto-optical modulator (13′) with a second following collecting lens (33′) is provided, in that the signal generator (20 ; 100 ; 200) exhibits two carrier-frequency modulators (21, 22, ..., 25 and 120, 121, ..., 129) for a number of different preset carrier frequencies ($\Omega_1$, ..., $\Omega_5$) which are allocated to the directions of reception to be formed, and for an equal number of adjustable modulation frequencies ($\omega_1$, ..., $\omega_5$), each carrier frequency ($\Omega_1$, ..., $\Omega_5$) forming, together with the modulation frequency ($\omega_1$, ..., $\omega_5$), a direction channel, in that behind each collecting lens (33 ; 233) an equal number of light-sensitive sensors (40, 40′) are provided at focal points of light beam bundles allocated to the direction channels, in that the first acousto-optical modulator (13) is connected to a first output of the signal generator (100) and the second acousto-optical modulator (13′) is connected to a second output of the signal generator (100), in that oscillations of the carrier-frequencies ($\Omega_1$, ..., $\Omega_5$) and sine-wave oscillations of the modulation frequencies ($\omega_1$, ..., $\omega_5$) are applied to a first half of the carrier frequency modulators (120, 122, 124, 126, 128) and oscillations of the same carrier frequencies ($\Omega_1$, ..., $\Omega_5$) and cosine-wave oscillations of the same modulation frequencies ($\omega_1$, ..., $\omega_5$) are applied to the other half of the carrier-frequency modulators (121, 123, 125, 127, 129), in that outputs of the carrier-frequency modulators (129, 122, ...) of the first half form one output of the signal generator (100) and outputs of the carrier-frequency modulators (121, 123, ...) of the other half form the second output of the signal generator (100), and in that the sensors (40, 40′) belonging to the same direction channel are in each case connected to a sum circuit and a different circuit (201, 102) with following direction indicator (70).

3. Device according to Claim 1 or 2, characterized in that the receiving transducers are arranged in one plane, in that in each case the acousto-optical modulator (213) can be acoustically influenced in two directions (x, y) transversely to the direction of light transmission and exhibits two sound generators (214, 215), in that the signal generator (200) exhibits m carrier frequencies ($\Omega_1$, $\Omega_2$, ..., $\Omega_m$) and modulation frequencies ($\omega_1$, $\omega_2$, ..., $\omega_m$) for forming m direction channels in one direction (x) and exhibits n carrier frequencies ($\Omega_1$, $\Omega_2$, ..., $\Omega_n$) and modulation frequencies ($\omega_1$, $\omega_2$, ..., $\omega_n$) for forming n direction channels in the other direction (y), in that the carrier-frequency modulators for the m direction channels are connected to one sound generator (214) and the carrier-frequency modulators for the n direction channels are connected to the other sound generator (215), and in that the number of receiving directions is equal to the product m . n of the direction channels in the two directions (x, y).

4. Device according to Claim 3, characterized in that each acousto-optical modulator (213) can be acoustically influenced horizontally and vertically and exhibits two sound generators (214, 125) which radiate in the vertical and horizontal direction, and in that equal carrier and modulation frequencies are used for forming the direction channels in the horizontal and vertical direction.

5. Device according to one of Claims 1 to 4, characterized in that a plate (transparency 49, 49′, 249) of light-transparent material is arranged in front of the acousto-optical modulator (13, 13′, 213) and in that the plate (transparency 49, 49′, 249) exhibits an optical density distribution which corresponds to a required amplitude weighting of the received signals.

**Revendications**

1. Dispositif pour déterminer des directions de réception lors de la réception d'une énergie ondulatoire possédant une fréquence centrale et une largeur de bande connue, et comportant un dispositif de réception (10) comprenant plusieurs transducteurs de réception, et des éléments photoémissifs (16), qui sont branchés en aval des transducteurs de réception et sont commandés par ces derniers et dont la disposition géométrique correspond, à une échelle réduite, au dispositif de réception, au moins un modulateur acousto-optique (13), qui est branché en aval des éléments, et raccordé à un générateur de signaux (20) et est chargé, transversalement par rapport à la direction d'irradiation, par des ondes acoustiques modulées, qui possèdent les fréquences des porteuses et ont une fréquence de modulation correspondant à la direction désirée de réception devant être obtenue instantanément, ainsi qu'une lentille convergente (33) installée en aval du modulateur acousto-optique, caractérisé en ce que le générateur de signaux (20 ; 100 ; 200) comporte des modulateurs (21, 22, ..., 25 ou 120, 121, ..., 129) servant à moduler les fréquences porteuses et prévus pour un certain nombre de fréquences porteuses différentes ($\Omega_1$, ..., $\Omega_5$), réglées de façon fixe et associées aux directions de réception devant être établies, et pour un nombre identique de fréquences de modulation réglables ($\omega_1$, ..., $\omega_5$), chaque fréquence porteuse ($\Omega_1$, ..., $\Omega_5$) formant, conjointement avec la fréquence de modulation ($\omega_1$, ..., $\omega_5$), un canal directionnel, et qu'en aval de la lentille convergente (33 ; 233) se trouvent disposés, au niveau des foyers des faisceaux de lumière associés aux canaux directionnels, un même nombre de détecteurs photosensibles (40), que deux filtres (51, ..., 55, 61, ..., 65) sont branchés en aval de chaque capteur (40, 41, ..., 45), qu'un filtre (51, ..., 55) est agencé pour transmettre la fréquence somme ($\omega_w + \omega_1$ ; ... ; $\omega_w + \omega_5$) formée par la somme de la fréquence de modulation ($\omega_1$, ..., $\omega_5$) et de la fréquence centrale ($\omega_w$) de l'énergie ondulatoire et que l'autre filtre (61, ..., 65) est agencé pour transmettre la fréquence différence ($\omega_w - \omega_1$, ..., $\omega_w - \omega_5$) formée par la différence de la fréquence centrale ($\omega_w$) de l'énergie ondulatoire et de la fréquence de modulation ($\omega_1$, ..., $\omega_5$), et que chaque filtre (51, ..., 55, 61, ..., 65) est relié à un dispositif d'affichage de direction (70, 270).

2. Dispositif pour déterminer la direction de réception lors de la réception d'une énergie ondulatoire possédant une fréquence centrale et une largeur de bande connue, et comportant un dispositif de réception (10) comportant plusieurs transducteurs de réception, et des éléments photoémissifs, qui sont branchés en aval des transducteurs de réception et sont commandés par ces derniers et dont la disposition géométrique correspond, à une échelle réduite, au dispositif de réception, au moins un premier modulateur acousto-optique (13), qui est branché en aval des éléments est raccordé à un générateur de signaux (20) et est chargé, transversalement par rapport à la direction d'irradiation, par des ondes acoustiques modulées, qui possèdent la fréquence de la porteuse et ont une fréquence de modulation correspondant à la direction désirée de réception devant être obtenue instantanément, ainsi qu'une première lentille convergente (33) installée en aval du modulateur acousto-optique, caractérisé en ce qu'il est prévu un second modulateur acousto-optique (13') en aval duquel est branchée une seconde lentille convergente (33'), le générateur de signaux (20 ; 100 ; 200) comporte deux modulateurs (21, 22, ..., 25 ou 120, 121, ..., 129) servant à moduler les fréquences porteuses et prévus pour un certain nombre de fréquences porteuses différentes ($\Omega_1$, ..., $\Omega_5$), réglées de façon fixe et associées aux directions de réception devant être établies, et pour un nombre identique de fréquences de modulation réglables ($\omega_1$, ..., $\omega_5$), chaque fréquence porteuse ($\Omega_1$, ..., $\Omega_5$) formant, conjointement avec la fréquence de modulation ($\omega_1$, ..., $\omega_5$), un canal directionnel, et qu'en aval de chaque lentille convergente (33 ; 233) se trouvent disposés, au niveau des foyers des faisceaux de lumière associés aux canaux directionnels, un même nombre de détecteurs photosensibles (40, 40'), que le premier modulateur acousto-optique (13) est relié à une première sortie du générateur de signaux (100) et que le second modulateur acousto-optique (13') est relié à une seconde sortie du générateur de signaux (100), qu'une première moitié des modulateurs (120, 122, 124, 126, 128) des oscillations possédant des fréquences porteuses est chargée par des oscillations possédant des fréquences porteuses ($\Omega_1$, ..., $\Omega_5$) et par des oscillations sinusoïdales possédant des fréquences de modulation ($\omega_1$, ..., $\omega_5$) et que l'autre moitié des modulateurs (121, 123, 125, 127, 129) des oscillations possédant des fréquences porteuses est chargée par des oscillations possédant les mêmes fréquences porteuses ($\Omega_1$, ..., $\Omega_5$) et par des oscillations en cosinus possédant les mêmes fréquences de modulation ($\omega_1$, ..., $\omega_5$), que des sorties des modulateurs (129, 122, ...) des fréquences porteuses de la première moitié forment une sortie du générateur de signaux (100) et des sorties des modulateurs (121, 123, ...) des fréquences porteuses de l'autre moitié forment la seconde sortie du générateur de signaux (100), et que les capteurs (40, 40'), qui font partie du même canal directionnel, sont reliés respectivement à un circuit additionneur et à un circuit soustracteur (201, 202), en aval desquels est branché le dispositif d'affichage directionnel (70).

3. Dispositif selon la revendication 1 ou 2, caractérisé en ce que les transducteurs de réception sont disposés dans un plan, que respectivement le modulateur acousto-optique (213) peut être influencé acoustiquement dans deux directions (x, y) transversalement par rapport à la direction d'irradiation et comporte deux générateurs acoustiques (214, 215), que le générateur de signaux (200) comporte, pour la formation de m canaux directionnels dans une direction (X), m fréquences porteuses ($\Omega_1$, $\Omega_2$, ..., $\Omega_m$) et des fréquences de modulation ($\omega_1$, $\omega_2$, ..., $\omega_m$) et, pour la formation de n canaux directionnels dans l'autre direction (y), n fréquences porteuses ($\tilde{\Omega}_1$, $\tilde{\Omega}_2$, ..., $\tilde{\Omega}_n$) et des fréquences de modulation ($\tilde{\omega}_1$, $\tilde{\omega}_2$, ..., $\tilde{\omega}_n$), que les modulateurs des fréquences porteuses pour les m canaux directionnels sont reliés à un générateur acoustique (214) et que les modulateurs des fréquences porteuses pour les n canaux directionnels sont reliés à l'autre générateur acoustique (215), et que le nombre des directions de réception est égal au produit m . n des canaux directionnels dans les deux directions (x, y).

4. Dispositif selon la revendication 3, caractérisé en ce que chaque modulateur acousto-optique (213) peut être influencé acoustiquement horizontalement et verticalement et comporte deux émetteurs acoustiques (214, 215) émettant dans des directions verticale et horizontale et que pour la formation des canaux directionnels dans les directions horizontale et verticale, on utilise des fréquences porteuses et des fréquences de modulation identiques.

5. Dispositif selon l'une des revendications 1 à 4, caractérisé en ce qu'une plaque (diapositive 49, 49', 249) réalisée en un matériau transparent est disposée devant le modulateur acousto-optique (13, 13', 213) et que la plaque (diapositive 49, 49', 249) comporte une répartition de noircissement, qui correspond à une pondération désirée de l'amplitude des signaux de réception.

Fig. 1

EP 0 185 994 B1

Fig. 2

Fig. 3